# EUROPEAN PATENT APPLICATION

(11) **EP 2 522 862 A1**
(43) Date of publication of application: **14.11.2012**
(21) Application number: 12165646.6
(22) Date of filing: 26.04.2012
(51) Int. Cl.: F16B 13/00, F16B 13/04, F16B 13/06, F16B 31/02

(54) **Fastening assembly**

(30) Priority: 12.05.2011 GB 201107924
(71) Applicant: Tension Control Bolts Ltd, Whitchurch Shropshire SY13 1LJ (GB)
(72) Inventor: Stokes, Timothy, Whitchurch, Shropshire SY13 1LJ (GB)
(74) Representative: Jones, Ithel Rhys

(57) **Abstract**

A fastening assembly (100) includes a tension controlled bolt (101) having a shank (102) including a spline (106) at a first end and a splaying arrangement (108) at, or adjacent, a second, opposite end. The assembly further includes a tightening arrangement (302, 304) for, in use, being threaded onto the first end of the tension controlled bolt, and a deformable sleeve (200) fitted, in use, over at least part of the shank of the tension controlled bolt, between the splaying arrangement and the tightening arrangement. In use, tightening of the tightening arrangement draws the splaying arrangement towards the tightening arrangement, thereby deforming at least one part (401) of the sleeve outwardly.

## Description

The present invention relates to fasteners.

Blind fastening devices are well known in the construction industry and are often used when physical access is only available from one side of the structural members that are to be fastened together. Such devices normally comprise an inner threaded bolt and an outer sleeve having several longitudinal slots and a round cone. The device is initially inserted through holes drilled in the members that are to be fastened together. A cone on the bolt (located at the inaccessible side of the structural members) is shaped so that when the bolt head at the opposite end is tightened by the operator, the cone is drawn inwards into the sleeve, pushing parts of it outwardly, thereby fastening the members between parts of the sleeve and the nut.

These conventional blind fastening devices normally require two tools to be used simultaneously during the installation operation: a wrench to hold the collar washer, which prevents the whole assembly from rotating, and a ratchet or the like for tightening the inner bolt. Further, in some applications the clamping force provided by such devices can be insufficient and it can be difficult for an operator to properly assess whether or not he has tightened the fastener sufficiently.

Tension controlled bolts (also called twist-off bolts, or torque controlled bolts) are also known and have been available for several decades. These types of fastening devices are calibrated so that a spline at one end of the bolt shank is sheared off when the bolt tension reaches its pre-loaded value as a result of the bolt being rotated using a special shear wrench during installation.

Although tension controlled bolts and blind fasteners have both been available for several years, there is no known fastening assembly that includes the beneficial features of both. Embodiments of the present invention are intended to provide an easy-to-use fastening assembly that is capable of achieving higher pull-out load figures than conventional fasteners.

According to a first aspect of the present invention there is provided a fastening assembly including:
a tension controlled bolt having a shank including a spline at a first end and a splaying arrangement at, or adjacent, a second, opposite end;
a tightening arrangement for, in use, being threaded onto the tension controlled bolt, and
a deformable sleeve fitted, in use, over at least part of the shank of the tension controlled bolt, between the splaying arrangement and the tightening arrangement,
where, in use, tightening of the tightening arrangement draws the splaying arrangement towards the tightening arrangement, thereby deforming at least one part of the sleeve outwardly.

In use, the sleeve may be deformed outwardly with respect to a central axis of the sleeve/shank.

The splaying arrangement may include at least one angled surface. At least part of an inner surface of the sleeve may be shaped to correspond to the at least one angled surface of the splaying arrangement. The splaying arrangement may have a frusto-conical surface. The surface may include at least one longitudinal slot (or similar formation). The at least one slot may run from an upper end of the sleeve to a point inboard of a second, opposite end of the sleeve. In some embodiments there are four said slots, each arranged at 90° with respect to each other.

At least some components of the fastening assembly may be coated with an anti-corrosion coating.

The tightening arrangement may include a nut and a washer, which may be formed of hardened steel.

The tension controlled bolt shank can have a threaded portion leading to a shear groove that leads to the spline.

In use, the assembly may be inserted through an aperture in first and second (back-to-back) surfaces. The first surface may be a surface of a first component to be fastened to a second component and the second surface may be a surface of the second component. Deforming the sleeve outwardly can prevent the assembly being moved through the aperture.

The tension controlled bolt and/or the sleeve may be formed of steel.

According to another aspect of the invention there is provided a method of fastening a plurality of members, the method including:
partially inserting an assembly substantially as described herein through an aperture in the members, and
using a shear wrench to tighten the tightening arrangement of the assembly, thereby fastening the plurality of members together.

According to further aspect of the present invention there is provided a tension controlled bolt having a shank including first end having a spline and a second, opposite end having an outer sleeve splaying arrangement. There may be provided a kit including at least one said tension controlled bolt and at least one deformable sleeve.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:
Figure 1 illustrates a tension controlled bolt that is part of an example fastening assembly;
Figure 2 illustrates a sleeve formed of deformable material that is also part of the assembly;
Figure 3 illustrates a fastening assembly where the sleeve has been fitted onto the bolt, and
Figures 4A - 4D are sectional views that schematically illustrate the assembly being used to fasten two members together.

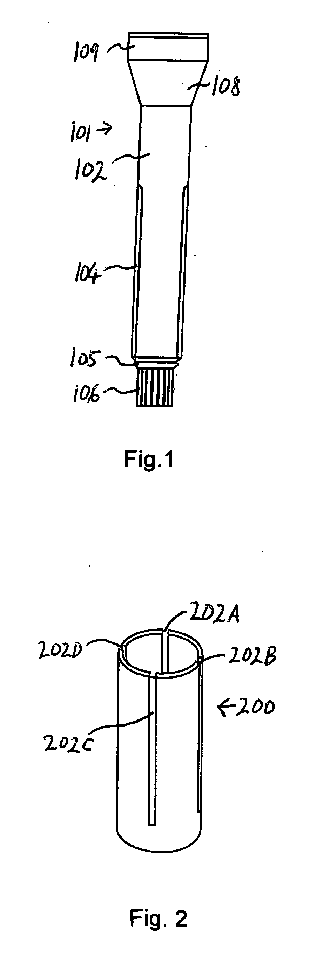

Figure 1 shows a modified tension controlled bolt 101 that is part of an example fastening assembly. The example bolt has a main shank 102 with a threaded section 104 that leads to a shear groove 105, which, in turn, leads to a spline 106. The skilled person will be familiar with such conventional features of tension controlled bolts and how they are formed and used. The bolt can be formed of steel, or any other suitable material(s), and it will be appreciated that its design and dimensions can be varied for different types of applications. The bolt can be formed in any conventional manner, e.g. by means of cold forming as one piece, or in some cases it may be formed of two or more separate components fixed together by any suitable means, e.g. welding. Further, all or some of the components of the assembly may be given a protective, e.g. anti-corrosion, coating, such as Greenkote®.

In contrast to known tension controlled bolts (which tend to have a domed bolt head with a flat base), the upper end of the shank 102 includes a splaying arrangement 108. In the example the splaying arrangement is in the form of a bolt head having a generally frusto-conical shape. The frusto-cone has a height of around 26 mm, a maximum diameter of 32.75 mm and the conical surface is angled at around 15° with respect to the vertical. The minimum diameter of the frusto-cone corresponds to the diameter of the shank and there is also a solid cylindrical portion 109 located on the opposite end of the frusto-cone, the diameter of this portion matching the maximum diameter. Embodiments of the assembly can be produced in standard sizes/diameters, e.g. M12, M16, M20 and M24. It will be understood that alternative splaying arrangements can be used in other embodiments, e.g. its outer surfaces could be in the form of a truncated pyramid or the like.

Figure 2 shows an example sleeve 200. The sleeve is generally cylindrical in design, but includes four slots 202A - 202D. The slots are arranged at around 90° with respect to each other. Each slot runs parallel to the central axis of the sleeve and extends continuously from the upper end of the sleeve to a point inboard of its lower end. The distance between the bottom of a slot and the lower end of the sleeve can be around 5 mm

The sleeve is formed of deformable material, such as steel. For instance, the bolt 101, nut 304 and washer 302 may be of grade 10.9 carbon steel, and the sleeve 200 can either be the same, or high tensile steel (grade 8.8). The sleeve 200 will normally be entirely formed of deformable material, although in alternative embodiments only parts of the sleeve may be deformable with other parts intended to remain rigid in use. It will be appreciated that the design and dimensions of the sleeve may vary. For instance, it can have a tubular shape of different cross-section to a cylinder; it may include a different number of slots (which may be arranged in a different manner on its outer surface(s)); in some cases formations other than continuous straight slots may be used, e.g. lines formed of discrete perforations or dimples.

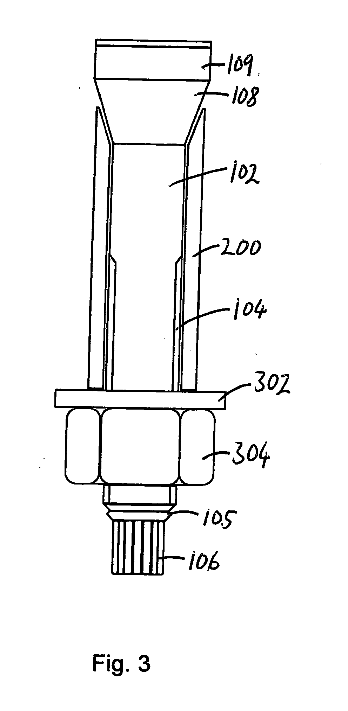

Figure 3 shows the sleeve 200 fitted on the bolt 101 in order to form an example fastening assembly 100. This is the typical configuration of the assembly prior to using it to fasten together members (as illustrated in the subsequent Figures). The sleeve is fitted over the shank, with its upper end adjacent/abutting the splaying arrangement 108. As can be seen, the inner surface of the sleeve at its upper end is chamfered or the like so that it generally corresponds to the angle of the frusto-conical splaying arrangement.

Below the lower end of the sleeve 200 a washer 302 has been inserted over the lower end of shank 102 of the bolt 100 and below that there is a nut 304. The washer and the nut can be conventional in design and can be formed of hardened steel or the like. The nut may be at least partially threaded onto the threaded portion 104 of the shank in order to keep the components in place before the fastening operation.

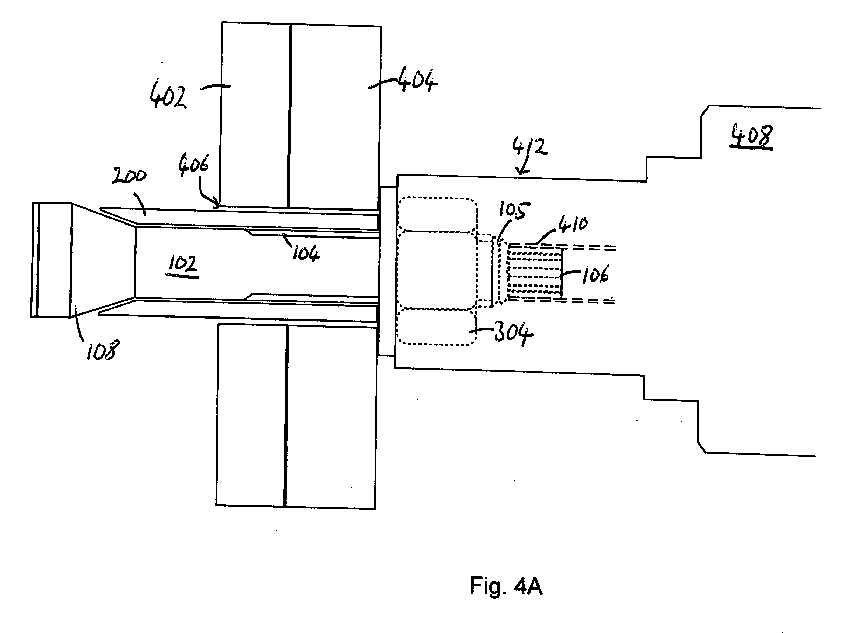

Figure 4A shows two members 402, 404 that are to be fastened together using the assembly 100. The members may be of any type, e.g. additional steel to be attached to square, rectangular, round or elliptical hollow steel sections. Prior to fastening, a straight, cylindrical hole 406 is formed, e.g. by drilling, through both of the members. The diameter of the aperture is such that it allows the splaying arrangement 108 of the bolt 100 and the sleeve 200 to pass through, but is too narrow to allow passage of the wider washer 302 and nut 304. The fastening assembly is pushed through the aperture so that the splaying arrangement 108, part of the shank 102 (but not the threaded portion 104 in the illustrated example) and a portion of the sleeve 200 protrudes beyond the outer surface of the first member 402, with the washer 302 abutting the outer surface of the second member 404.

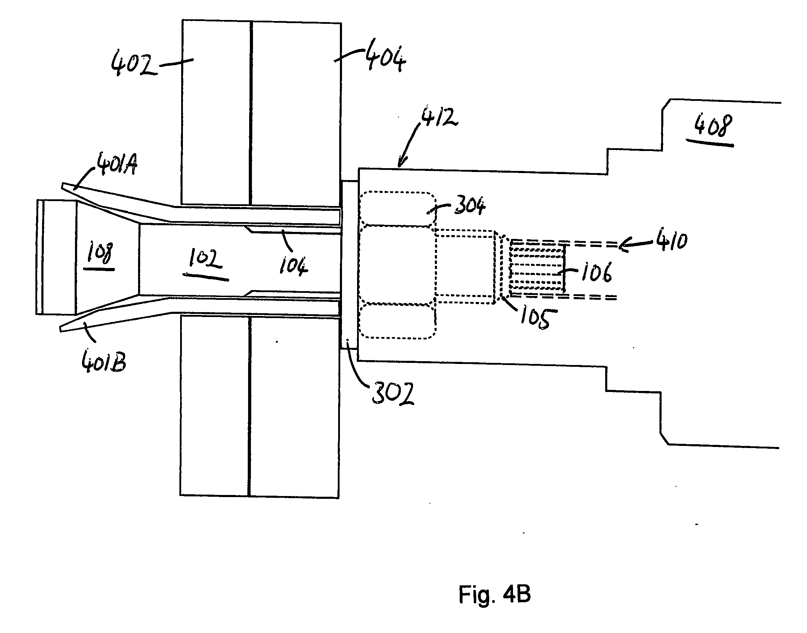

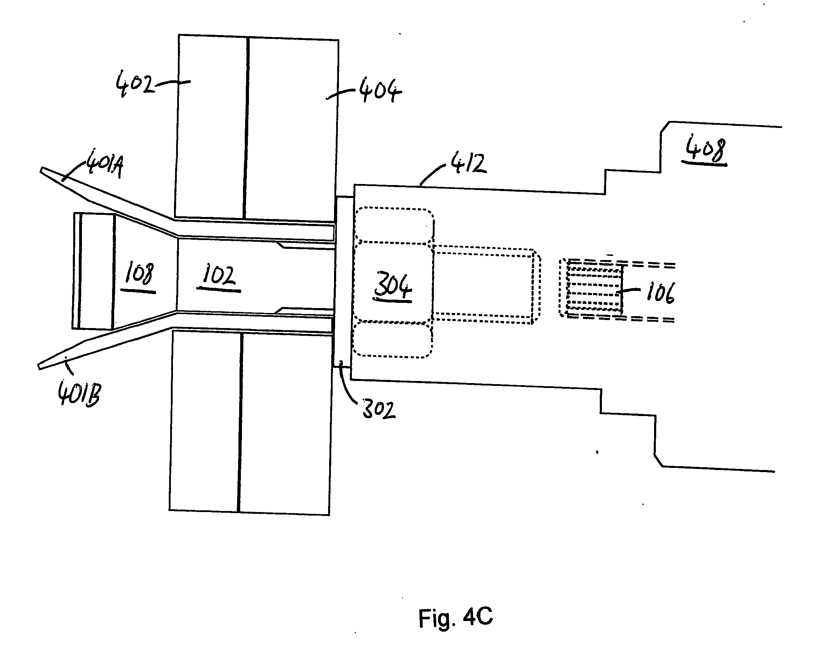

A bolt fixing tool (partially shown schematically at 408), such as a conventional shear wrench for tension controlled bolts (e.g. the GM series of wrenches available from Tension Control Bolts Ltd of Whitchurch, UK), is then used to tighten the fastening assembly. The inner socket 410 of the wrench engages the spline 106 of the assembly 100 and the outer socket 412 of the wrench engages the nut 304. The wrench is then operated in a conventional manner so that its outer socket rotates the nut relative to the shank 102 of the bolt. As the bolt is tightened, the end of the shank with the splaying arrangement 108 is drawn towards the wrench. The splaying arrangement contacts the open end of the sleeve 200, causing it to deform outwardly with respect to a central axis of the bolt/sleeve, as shown in Figure 4B. The four slots 202A - 202D in the example sleeve mean that four sections (only two, 401A, 401 B, of which are visible in the Figures) of the sleeve between the slots splay outwardly. Continued rotation/tightening of the bolt shank results in increased outward splaying of the sleeve sections, as shown in Figure 4C. Portions of the sleeve sections contact the outer surface of the first member 402 and are held firmly in position by the abutting splaying arrangement 108 within, which provides a strong clamping force. As is conventional, the bolt is tightened until the required bolt pre-load tension is reached and at that point the spline shears off, as shown in Figure 4C.

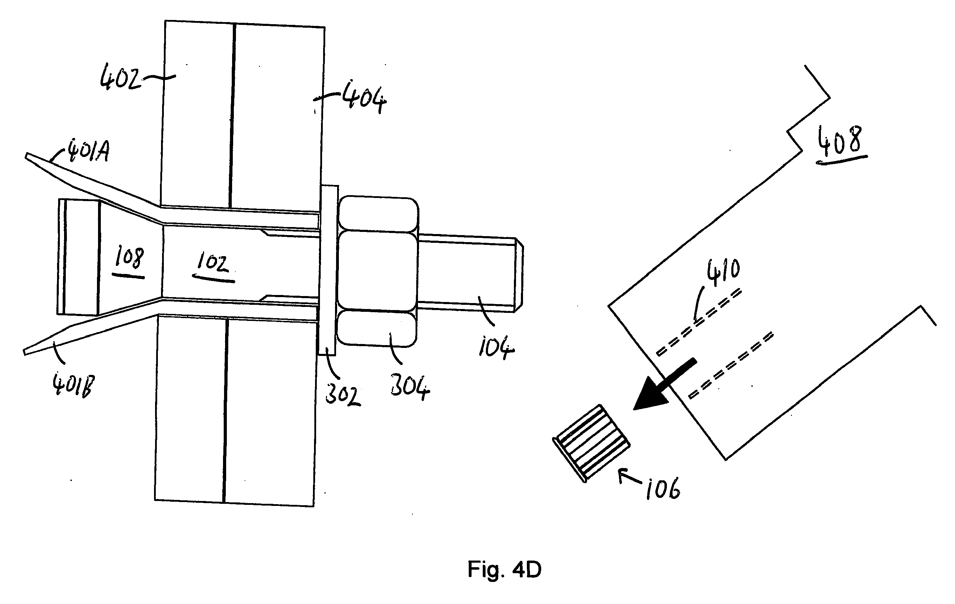

When the installation process it complete, the wrench 408 is pulled away and the sheared spline 106 can be safely ejected from it, as illustrated in Figure 4D. The operator can visually inspect the sheared end of the installed fastening assembly to ensure that the correct pre-load has been achieved.

Embodiments of the fastening assembly described herein can achieve much higher pull-out load figures than conventional tension controlled bolts and conventional blind fasteners. Being able to use a conventional shear wrench means that the assembly can be installed by a single operator using one hand and with minimal noise. The risk of operator fatigue and hand-arm vibration syndrome is therefore reduced, compared with other types of fasteners that require fully manual installation or use of heavy-duty tools. Further, it also means that no specialised installation tool has to be produced and no additional training is required for operators. The assembly is quick and easy to install and can provide guaranteed tension together with visual inspection, thereby reducing or eliminating the likelihood of operator error and ensures engineers that connections are tightened in accordance with specifications.

## Claims

1. A fastening assembly (100) including:
a tension controlled bolt (101) having a shank (102) including a spline (106) at a first end and a splaying arrangement (108) at, or adjacent, a second, opposite end;
a tightening arrangement (302, 304) for, in use, being threaded onto the first end of the tension controlled bolt, and
a deformable sleeve (200) fitted, in use, over at least part of the shank of the tension controlled bolt, between the splaying arrangement and the tightening arrangement,
where, in use, tightening of the tightening arrangement draws the splaying arrangement towards the tightening arrangement, thereby deforming at least one part (401) of the sleeve outwardly.

2. An assembly according to claim 1, where, in use, the at least one part (401) of the sleeve (200) is deformed outwardly with respect to a central axis of the sleeve or shank (102).

3. An assembly according to claim 1 or 2, wherein the splaying arrangement (108) includes at least one angled surface.

4. An assembly according to claim 3, wherein at least part of an inner surface of the sleeve (200) is shaped to correspond to the at least one angled surface of the splaying arrangement (108).

5. An assembly according to claim 3 or 4, wherein the splaying arrangement (108) has a frusto-conical surface.

6. An assembly according to claim 4 or 5, wherein the sleeve (200) includes at least one longitudinal slot (202).

7. An assembly according to claim 6, wherein the at least one slot (202) extends from an upper end of the sleeve (200) to a point inboard of a second, opposite end of the sleeve.

8. An assembly according to claim 7, including four said slots (202A - 202D), the slots being arranged at 90° with respect to each other.

9. An assembly according to any one of the preceding claims, wherein at least some components of the assembly are coated with an anti-corrosion coating.

10. An assembly according to any one of the preceding claims, wherein the tension controlled bolt shank (102) includes a threaded portion (104) leading to a shear groove (105) that leads to the spline (106).

11. An assembly according to any one of the preceding claims, where, in use, the assembly is inserted through a hole (406) passing through first (402) and second (404) members to be fastened together.

12. An assembly according to any one of the preceding claims, wherein the sleeve (200) is formed of steel.

13. A tension controlled bolt (100) including a shank (102) having a first end including a spline (106) and a second, opposite end including an arrangement (108) for, in use, splaying an outer sleeve (200).

14. A kit including a tension controlled bolt (101) according to claim 13 and at least one deformable sleeve (200).

15. A method of fastening a plurality of members (402, 404), the method including:
partially inserting an assembly (100) according to any one of the preceding claims through a hole (406) in the members, and
using a shear wrench (408) to tighten the tightening arrangement (302, 304) of the assembly, thereby fastening the plurality of members together.
